# EUROPEAN PATENT APPLICATION

(11) **EP 4 006 747 A1**
(43) Date of publication of application: **01.06.2022**
(21) Application number: 20843234.4
(22) Date of filing: 22.05.2020
(51) Int. Cl.: G06F 16/63

(54) **SPEECH INFORMATION PROCESSING METHOD AND DEVICE, STORAGE MEDIUM, AND ELECTRONIC DEVICE**

(30) Priority: 22.07.2019 CN 201910663139
(71) Applicant: ZTE Corporation, Shenzhen, Guangdong 518057 (CN)
(72) Inventor: ZHU, Shizheng, Shenzhen, Guangdong 518057 (CN); LIU, Yang, Shenzhen, Guangdong 518057 (CN)
(74) Representative: Novagraaf Technologies
(86) International application number: PCT/CN2020/091902
(87) International publication number: WO 2021/012772

(57) **Abstract**

Provided are a method and a device for processing voice information, a storage medium and an electronic apparatus. The method comprises: searching whether there is voice information matching first question sentence voice information inputted by a user (S202); in a case that a searching result is no, performing semantic analysis on the first question sentence voice information, and generating second question sentence voice information according to the first question sentence voice information and a semantic analysis result of the first question sentence voice information (S204); searching the second question sentence voice information, and determining, according to a searching result, voice information of a rhetorical question sentence corresponding to the second question sentence voice information (S206); and determining, according to an answer of the user to the rhetorical question sentence, question sentence voice information to be fed back to the user (S208). The present invention solves the problem in the related art of limitation in recovering omission-type semantic loss on the basis of a semantic understanding result of a knowledge graph, thereby improving the user experience.

## Description

### Technical Field

The present invention relates to the field of communications, and in particular to a method and a device for processing voice information, a storage medium and an electronic apparatus.

### Background

Omission recovery of question sentences of a user is an important research direction in the field of multi-round interactive question and answer system, and is mainly used for recovering omitted parts in the question sentences of the user. The existing omission recovery systems are mainly divided into two major types: one type is recovery of referential semantic loss, and the other type is recovery of omission-type semantic loss. However, the existing recovery of omission-type semantic loss is basically based on a semantic understanding result of a knowledge graph, but not all knowledge can be constructed in the knowledge graph, and some strongly-colloquial knowledge is only suitable to be constructed in other index databases.

In view of the described problem in the related art, no effective solution has been proposed yet.

### Summary

The embodiments of the present invention provide a method and a device for processing voice information, a storage medium and an electronic apparatus, so as to at least solve the problem in the related art of limitation in recovering omission-type semantic loss on the basis of a semantic understanding result of a knowledge graph.

According to some embodiments of the present invention, a method for processing voice information is provided, including: searching whether there is voice information matching first question sentence voice information inputted by a user; in a case that a searching result is no, performing semantic analysis on the first question sentence voice information, and generating second question sentence voice information according to the first question sentence voice information and a semantic analysis result of the first question sentence voice information; searching the second question sentence voice information, and determining, according to a searching result, voice information of an interrogative sentence corresponding to the second question sentence voice information; and determining, according to an answer of the user to the interrogative sentence, question sentence voice information to be fed back to the user.

According to some other embodiments of the present invention, a device for processing voice information is provided, including: a searching module, configured to search whether there is voice information matching first question sentence voice information inputted by a user; a first processing module, configured to in a case that a searching result is no, perform semantic analysis on the first question sentence voice information, and generate second question sentence voice information according to a semantic analysis result; a second processing module, configured to search the second question sentence voice information, and determine, according to a searching result, voice information of an interrogative sentence corresponding to the second question sentence voice information; and a determination module, configured to determine, according to an answer of the user to the interrogative sentence, question sentence voice information to be fed back to the user.

According to still some other embodiments of the present invention, a storage medium is further provided, the storage medium stores a computer program, wherein the computer program is configured to execute, when running, the steps in any one of the described method embodiments.

According to still some other embodiments of the present invention, an electronic apparatus is further provided, including a memory and a processor; the memory stores a computer program, and the processor is configured to run the computer program so as to execute the steps in any one of the described method embodiments.

By means of the present invention, if voice information matching first question sentence voice information is not found, semantic analysis is performed on the first question sentence voice information, and second question sentence voice information is generated according to a semantic analysis result; searching is performed again, and voice information of an interrogative sentence corresponding to the second question sentence voice information is determined according to a searching result; and question sentence voice information to be fed back to the user is determined according to an answer of the user to the interrogative sentence. That is to say, during voice interaction with a user, voice information corresponding to first question sentence voice information can be accurately recovered, avoiding the situation of recovering omission-type semantic loss only by relying on a knowledge graph, thereby solving the problem in the related art of limitation in recovering omission-type semantic loss on the basis of a semantic understanding result of a knowledge graph, and improving the user experience.

### Brief Description of the Drawings

The drawings illustrated herein are used for providing further understanding of the present invention and constitute a part of some embodiments of the present invention, and the illustrative embodiments of the present invention and illustrations thereof are used for explaining the present invention, rather than constitute inappropriate limitation on the present invention. In the drawings:
Fig. 1 is a structural block diagram of hardware of a terminal in a method for processing voice information according to embodiments of the present invention;
Fig. 2 is a flowchart of a method for processing voice information according to embodiments of the present invention;
Fig. 3 is a structural block diagram of a device for processing voice information according to embodiments of the present invention;
Fig. 4 is an optional structural block diagram of a device for processing voice information according to embodiments of the present invention;
Fig. 5 is a structural diagram of modules of an omission recovery question and answer system based on a knowledge graph and FAQ according to embodiments of the present invention; and
Fig. 6 is a flowchart of an omission recovery method based on a knowledge graph and FAQ according to embodiments of the present invention.

### Detailed Description of the Embodiments

Hereinafter, the present invention is described in detail with reference to the accompanying drawings and in conjunction with the embodiments. It is to be noted that embodiments in the present invention and features in the embodiments may be combined with one another without conflicts.

It is to be noted that the terms "first", "second", etc. in the description, claims and drawings of the present invention are used to distinguish similar objects, and are not necessarily used to describe a specific sequence or a precedence order.

### Embodiment 1:

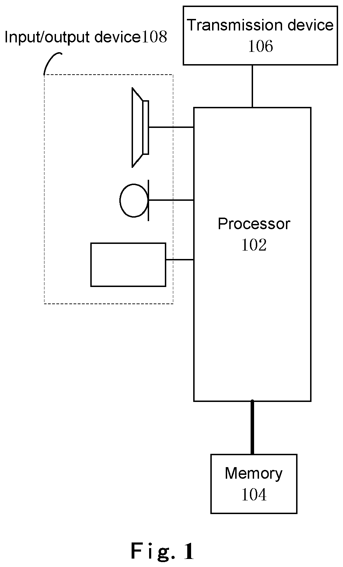

Method embodiments provided in Embodiment 1 of the present invention may be executed in a terminal, a computer terminal, or similar computing apparatuses. Taking running on a terminal as an example, Fig. 1 is a structural block diagram of hardware of a terminal in a method for processing voice information according to embodiments of the present invention. As shown in Fig. 1, a terminal 10 may include one or more (Fig. 1 shows only one) processors 102 (the processors 102 may include, but are not limited to processing apparatus such as a micro control unit (MCU) or a programmable logic device, FPGA) and a memory 104 for storing data. In an embodiment, the terminal can further include a transmission device 106 and an input/output device 108 for a communication function. A person of ordinary skill in the art would understand that the structure shown in Fig. 1 is merely exemplary, and does not limit the structure of the described terminal. For example, the terminal 10 may also include more or fewer components than those shown in Fig. 1, or have different configurations from that shown in Fig. 1.

The memory 104 may be used for storing a computer program, for example, a software program and a module of application software, such as a computer program corresponding to the method for processing voice information in the embodiments of the present invention; and the processor 102 runs the computer program stored in the memory 104 to execute various functional applications and data processing, i.e., to implement the described method. The memory 104 may include a high-speed random access memory, and may also include a non-transitory memory, such as one or more magnetic storage apparatuses, flash memories, or other non-transitory solid-state memories. In some instances, the memory 104 may further include memories remotely arranged with respect to the processor 102, and these remote memories may be connected to the terminal 10 over a network. Examples of the described network include, but are not limited to the Internet, an intranet, a local area network, a mobile communication network, and a combination thereof.

The transmission device 106 is configured to receive or transmit data over a network. Specific examples of the described network may include a wireless network provided by a communication provider of the terminal 10. In one example, the transmission device 106 includes a network interface controller (NIC for short) which may be connected to other network devices by means of a base station, thereby being able to communicate with the Internet. In one example, the transmission device 106 may be a radio frequency (RF for short) module for communicating wirelessly with the Internet.

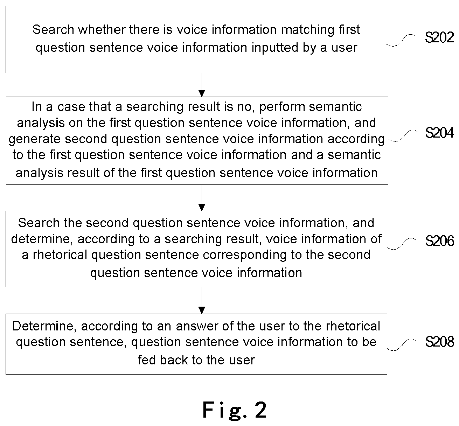

In this embodiment, a method for processing voice information running on the terminal above is provided. Fig. 2 is a flowchart of a method for processing voice information according to embodiments of the present invention. As shown in Fig. 2, the flow includes the following steps:
at step S202, searching whether there is voice information matching first question sentence voice information inputted by a user;
wherein in step S202, in some embodiments of the present invention, the searching step is preferably executed in an FAQ (Frequently Asked Question) system, and of course may also be executed in other systems;
at step S204, in a case that a searching result is no, performing semantic analysis on the first question sentence voice information, and generating second question sentence voice information according to the first question sentence voice information and a semantic analysis result of the first question sentence voice information;
it should be noted that performing semantic analysis on the first question sentence voice information is performing semantic analysis on the basis of a knowledge graph;
at step S206, searching the second question sentence voice information, and determining, according to a searching result, voice information of an interrogative sentence corresponding to the second question sentence voice information; and
at step S208, determining, according to an answer of the user to the interrogative sentence, question sentence voice information to be fed back to the user.

By means of the described steps S202 to S208, if voice information matching first question sentence voice information is not found, semantic analysis is performed on the first question sentence voice information, and second question sentence voice information is generated according to a semantic analysis result; searching is performed again, and voice information of an interrogative sentence corresponding to the second question sentence voice information is determined according to a searching result; and question sentence voice information to be fed back to the user is determined according to an answer of the user to the interrogative sentence. That is to say, during voice interaction with a user, voice information corresponding to first question sentence voice information can be accurately recovered, avoiding the situation of recovering omission-type semantic loss only by relying on a knowledge graph, thereby solving the problem in the related art of limitation in recovering omission-type semantic loss on the basis of a semantic understanding result of a knowledge graph, and improving the user experience.

In an example of this embodiment, the manner of performing semantic analysis on the first question sentence voice information, and generating second question sentence voice information according to the first question sentence voice information and a semantic analysis result of the first question sentence voice information involved in step S204 of the this embodiment may be implemented in the following manner:
at step S204-11, extracting one or more content words from the first question sentence voice information; and
at step S204-12, performing association on the extracted one or more content words, to obtain one or more associated words.

It should be noted that in application scenarios of the present invention, a manner of performing association on one or more content words may be: performing association to obtain words which are hypernym or hyponym concepts of the one or more content words, for example, hyponyms of "bank card" include "debit card" and "credit card"; hyponyms of "food" include "Hunan cuisine", "Sichuan cuisine" and "Japanese and Korean cuisine", etc.; and hypernym of "automobile" and "bus" is "vehicle". The content above is exemplified illustration of hypernym or hyponym concepts of the word, and specifically association may be performed according to an actual preset relationship between words. In addition to performing association by means of hypernym or hyponym relationships, association may also be performed by means of words of the same type, for example, "Hunan cuisine" may be associated to obtain "Sichuan cuisine", "Guangdong cuisine", "Japanese and Korean cuisine", etc.; and "taxi" may be associated to obtain "express car", "special car", "hitchhiking", etc. Likewise, association is performed on specifically associated words according to a preset association relationship, and the association relationship can be adjusted according to actual situations.

At step S204-13, one or more pieces of second question sentence voice information are generated according to a context of the first question sentence voice information and one or more associated words obtained by association.

On the basis of the described associated words, with regard to the described steps S204-11 to S204-13, in a specific application scenario, if first question sentence voice information inputted by a user is "how to apply for a bank card?", and the first question sentence voice information cannot be found in a voice information database, such as a knowledge graph, then semantic analysis is performed on the first question sentence voice information, that is, an entity word extracted therefrom is "bank card", and associated words obtained by performing association thereon are "debit card" and "credit card". New question sentences are generated by combining a context of the first question sentence voice information with the associated words "debit card" and "credit card" obtained by performing association. Specifically, the entity word "bank card" in the question sentence can be replaced with the associated words "debit card" and "credit card" thereof, so as to obtain second question sentence voice information, i.e., "how to apply for a credit card?", and "how to apply for a debit card?". Finally, searching is performed on the newly generated two pieces of second question sentence voice information.

In embodiments of the present invention, the manner of searching the second question sentence voice information, and determining, according to a searching result, voice information of an interrogative sentence corresponding to the second question sentence voice information involved in step S206 of the present invention may be implemented in the following manner:
at step S206-11, in a case that there is only one associated word, searching, according to the one associated word, to obtain voice information of an interrogative sentence corresponding to the second question sentence voice information.

With regard to step S206-11, in a specific application scenario, if the first question sentence voice information is "how to apply for a bank card", and the first question sentence voice information cannot be matched in the knowledge graph, semantic analysis is performed on the first question sentence voice information; and it is assumed that only one word "debit card" is obtained by associating according to "bank card", voice information of an interrogative sentence obtained on this basis is "would you like to apply for a debit card?".

At step S206-12, in a case that there are multiple associated words, searching, according to the multiple associated words, to obtain voice information of multiple interrogative sentences corresponding to the second question sentence voice information.

With regard to the described step S206-12, in a specific application scenario, if the first question sentence voice information is "how to get to the Provident Fund Center located in the Northern New District", an entity word extracted by semantic analysis is "Provident Fund Center", and a place constraint word is "Northern New District", and then words obtained by performing association on "Provident Fund Center" and "Northern New District" are "Chong Qing Municipal Provident Fund Center" and "Provident Fund Center in the Northern New District"; and then the obtained voice information of the interrogative sentences is "would you like to get to the Chong Qing Municipal Provident Fund Center, or the Provident Fund Center in the Northern New District".

In an example of this embodiment, the manner of determining question sentence voice information to be fed back to the user involved in step S208 of this embodiment may be implemented in the following manner:
at step S208-11, broadcasting, to the user, voice information of one or more interrogative sentences obtained by searching according to one or more associated words;
at step S208-12, acquiring answer voice information of the user to the voice information of the one or more interrogative sentences; and
at step S208-13, determining, according to the answer voice information of the user, question sentence voice information to be fed back to the user.

On the basis of the examples in specific application scenarios in step S202 to step S206, for example, the first question sentence voice information is "how to apply for a bank card", and an interrogative sentence obtained on this basis is "would you like to apply for a credit card or a debit card?"; in this case, the user answers according to actual requirement, for example, if the real requirement of the user is wondering how to apply for a credit card, the answer of the user is credit card. According to the answer of the user, it can be determined that the question sentence voice information to be fed back to the user is "how to apply for a credit card?".

In an example of this embodiment, the method steps of this embodiment can further include:
at step S210: in a case that it is found that there is voice information matching the first question sentence voice information inputted by the user, returning, to the user, a result matching the first question sentence voice information.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. On the basis of such understanding, the portion of the technical solution of the present invention that contributes in essence or to the prior art may be embodied in the form of a software product. The computer software product is stored in a storage medium (such as an ROM/RAM, a magnetic disk and an optical disc), and includes several instructions for enabling a terminal device (which may be a mobile phone, a computer, a server, or a network device, etc.) to perform the methods in various embodiments of the present invention.

### Embodiment 2:

This embodiment further provides a device for processing voice information. The device is used for implementing the described embodiments and preferred embodiments, and what has been described will not be repeated again. As used below, the term "module" may implement a combination of software and/or hardware of predetermined functions. Although the device described in the following embodiments is preferably implemented in software, implementation in hardware or a combination of software and hardware is also possible and conceived.

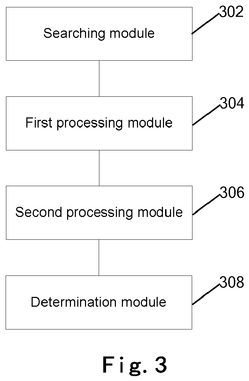

Fig. 3 is a structural block diagram of a device for processing voice information according to embodiments of the present invention. As shown in Fig. 3, the device includes: a searching module 302, configured to search whether there is voice information matching first question sentence voice information inputted by a user; a first processing module 304, coupled to the searching module 302 and configured to in a case that a searching result is no, perform semantic analysis on the first question sentence voice information, and generate second question sentence voice information according to a semantic analysis result; a second processing module 306, coupled to the first processing module 304 and configured to search the second question sentence voice information, and determine, according to a searching result, voice information of an interrogative sentence corresponding to the second question sentence voice information; and a determination module 308, coupled to the second processing module 306 and configured to determine, according to an answer of the user to the interrogative sentence, question sentence voice information to be fed back to the user.

In an embodiment, the first processing module 304 in this embodiment can further include: an extraction unit, configured to extract one or more content words from the first question sentence voice information; an association unit, configured to perform association on the extracted one or more content words, to obtain one or more associated words; and a searching unit, configured to generate one or more pieces of second question sentence voice information according to a context of the first question sentence voice information and one or more associated words obtained by association.

In an embodiment, the second processing module 306 in this embodiment is further configured to in a case that there is only one associated word, search, according to the one associated word, to obtain voice information of an interrogative sentence corresponding to the second question sentence voice information; and in a case that there are multiple associated words, searching, according to the multiple associated words, to obtain voice information of multiple interrogative sentences corresponding to the second question sentence voice information.

In an embodiment, the determination module 308 in this embodiment can further include: a broadcasting unit, configured to broadcast, to the user, voice information of one or more interrogative sentences obtained by searching according to one or more associated words; a determination unit, configured to acquire answer voice information of the user to the voice information of the one or more interrogative sentences; and a recovery unit, configured to determine, according to the answer voice information of the user, question sentence voice information to be fed back to the user.

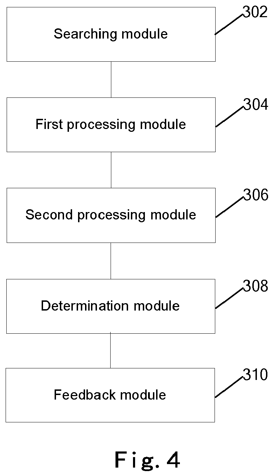

Fig. 4 is an optional structural block diagram of a device for processing voice information according to embodiments of the present invention. As shown in Fig. 4, the device includes: a feedback module 310, coupled to the determination module 308 and configured to in a case that it is found that there is voice information matching the first question sentence voice information inputted by the user, return, to the user, a result matching the first question sentence voice information.

It should be noted that the modules above may be implemented by software or hardware, and the latter may be implemented in the following manner, but is not limited thereto. All the modules above are located in the same processor; or all the modules above are located in different processors in any arbitrary combination manner.

### Embodiment 3:

In Embodiment 3, exemplified illustration is made to Embodiments 1 and 2 of the present invention in conjunction with Specific implementing examples of the present invention.

The present Specific implementing example provides an omission recovery method based on a knowledge graph and an FAQ system, and a question and answer system, so as to solve the defect of omission recovery systems in the related art. The core concept of the present Specific implementing example is: on the basis of a semantic understanding result of a knowledge graph, the semantic understanding result of the knowledge graph is effectively applied to FAQ search, and omitted parts in user question sentences are recovered according to a final FAQ searching result and the semantic understanding result of the knowledge graph, thereby improving the user experience of multi-round interactive question and answer.

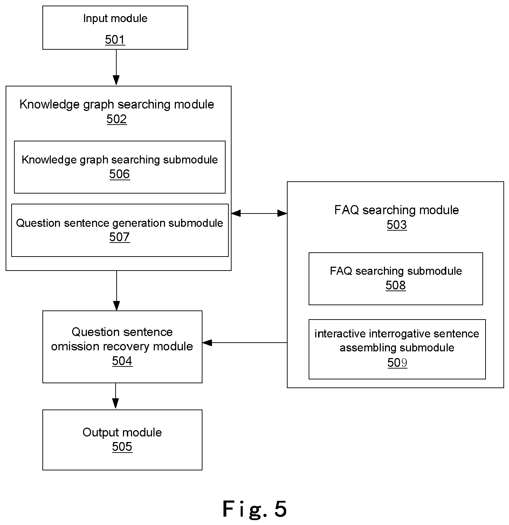

Fig. 5 is a structural diagram of modules of an omission recovery question and answer system based on a knowledge graph and FAQ according to embodiments of the present invention. As shown in Fig. 5, the system includes: an input module 501, a knowledge graph searching module 502, an FAQ searching module 503, a question sentence omission recovery module 504 and an output module 505.

The input module 501 is configured to receive an input request of a user, and send input information of the user to the knowledge graph searching module 502; and
the knowledge graph searching module 502 includes a knowledge graph searching submodule 506 and a question sentence generation submodule 507.

The knowledge graph searching submodule 506 is configured to perform knowledge graph searching and semantic analysis and understanding on an original question sentence inputted by the user, so as to obtain a corresponding semantic understanding result (extracting content words and attribute words from the original question sentence); and the question sentence generation submodule 507 is configured to regenerate a new question sentence according to the semantic understanding result obtained by the knowledge graph searching submodule 506 and the original question sentence inputted by the user.

The specific manner is: an entity word extracted from the original question sentence of the user on the basis of the knowledge graph can be replaced with content words having semantic relationship chains therewith, for example, hypernyms or hyponyms corresponding to the entity word, and newly generated question sentences are sent to the FAQ searching module 503. It should be particularly noted that the question sentence generation submodule newly added in the knowledge graph searching module is a main difference between the present invention patent and knowledge graph searching modules in existing mainstream omission recovery question and answer systems.

The FAQ searching module 503 includes: an FAQ searching submodule 508 and an interactive interrogative sentence assembling submodule 509; wherein the FAQ searching submodule 508 is configured to search, in an FAQ index database, according to question sentences newly generated by the question sentence generation submodule 507; and the interactive interrogative sentence assembling submodule 509 is configured to assemble, according to a searching result of the FAQ searching submodule 508, an interrogative sentence returned to the user, so as to obtain a real intention of the user.

The question sentence omission recovery module 504 is configured to recover omitted parts of the question sentence according to the interrogative sentence obtained by the interactive interrogative sentence assembling submodule 509 and a question sentence inputted by the user in a new round.

The output module 505 is configured to output a question and answer result and return same to the user.

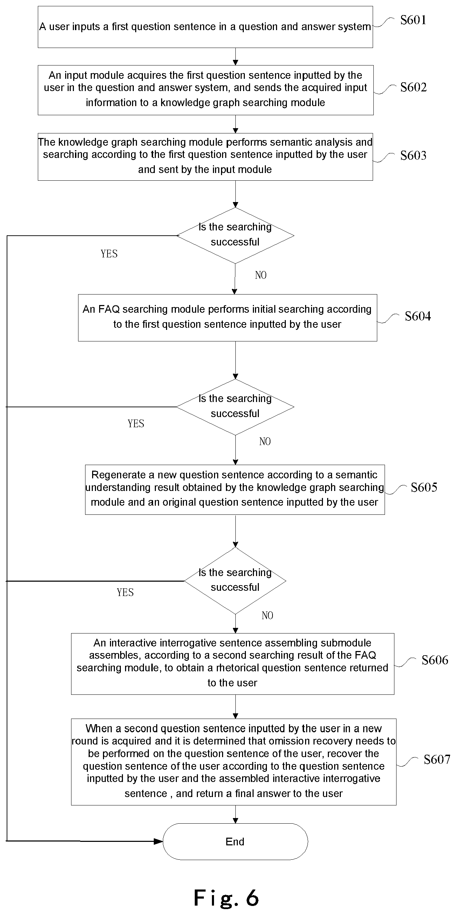

On the basis of the question and answer system in Fig. 5, the present embodiment further provides an omission recovery method based on a knowledge graph and FAQ. Fig. 6 is a flowchart of an omission recovery method based on a knowledge graph and FAQ according to embodiments of the present invention. As shown in Fig. 6, the method steps include:
at step S601, a user inputting a first question sentence in a question and answer system;
at step S602, an input module acquiring the first question sentence inputted by the user in the question and answer system, and sending the acquired input information to a knowledge graph searching module;
at step S603, the knowledge graph searching module performing semantic analysis and searching according to the first question sentence inputted by the user and sent by the input module, and if an answer is found, directly proceeding to step S608, and the interaction ends; and if no answer is found, entering step S604;
at step S604, an FAQ searching module performing initial searching according to the first question sentence inputted by the user, and if an answer is found, directly proceeding to step S608, and the interaction ends; and if no answer is found, entering step S605;
at step S605: regenerating a new question sentence according to a semantic understanding result obtained by the knowledge graph searching module and an original question sentence inputted by the user,
wherein preferably, an entity word extracted on the basis of a knowledge graph from the first question sentence inputted by the user can be replaced with content words having semantic relationship chains therewith, for example, hypernyms or hyponyms corresponding to the entity word, and in an FAQ index database, searching is performed again on the newly generated question sentence; if an answer is found, directly proceeding to step S608, and the interaction ends; and if no answer is found, entering step S606;
at step S606, an interactive interrogative sentence assembling submodule assembling, according to a second searching result of the FAQ searching module, to obtain an interrogative sentence returned to the user;
at step S607, when a second question sentence inputted by the user in a new round is acquired and it is determined that omission recovery needs to be performed on the question sentence of the user, recovering the question sentence of the user according to the question sentence inputted by the user and the interactive interrogative sentence assembled in step S606, and returning a final answer to the user; and
at step S608, interactive question and answer ends.

Hereinafter, exemplified illustration is made on the question and answer system, and the omission recovery method based on a knowledge graph and FAQ in Figs. 5 and 6 with reference to Specific implementing examples of the present invention.

Specific implementing example 1: In an omission recovery method for question sentences in a multi-round interactive question and answer system in the field of banks, the method include the following steps:
at step S701, a user inputting a first question sentence: how to apply for a bank card?;
at step S702, a question and answer system searching in a knowledge graph and an FAQ database according to the first question sentence inputted by the user, and answers are not found in both the knowledge graph and the database, and on the basis of the knowledge graph, an entity word extracted from the question sentence of the user is: bank card, and obtained hyponyms thereof are debit card and credit card;
at step S703, replacing the bank card in the first question sentence inputted by the user with a debit card and a credit card respectively, and performing FAQ search, wherein an answer can be found;
at step S704, assembling, according to a searching result in S703, an interactive interrogative sentence returned to the user: would you like to apply for a credit card or a debit card?;
at step S705, the user inputting a second question sentence: a credit card;
at step S706, according to the interactive interrogative sentence assembled in step S704 and the second question sentence inputted by the user in S705, performing omission recovery on the second question sentence inputted by the user, and a recovery result being: how to apply for a credit card?; and
at step S707, searching the recovered question sentence, and returning a corresponding answer to the user.

Specific implementing example 2: In an omission recovery method for question sentences in a multi-round interactive question and answer system in the field of chatting, the steps of the method include:
at step S801, a user inputting a first question: how to get to the Provident Fund Center located in the Northern New District?;
at step S802, a question and answer system searching in a knowledge graph and an FAQ database according to the first question sentence inputted by the user, and answers are not found in both the knowledge graph and the database, and on the basis of the knowledge graph, a coarse-grained entity word extracted from the question sentence of the user is: "Provident Fund Center", and a place constraint word is "Northern New District", furthermore, according to a semantic understanding result of the knowledge graph, obtaining that fine-grained content words both constrained by the Northern New District are Chong Qing Municipal Provident Fund Center and Provident Fund Center of the Northern New District;
at step S803, replacing the Provident Fund Center in the first question sentence inputted by the user with Chong Qing Municipal Provident Fund Center and Provident Fund Center of the Northern New District respectively, and performing FAQ search, wherein an answer can be found;
at step S804, assembling, according to a searching result in S803, an interactive interrogative sentence returned to the user: would you like to get to the Chong Qing Municipal Provident Fund Center, or the Provident Fund Center of the Northern New District?;
at step S805, the user inputting a second question sentence: Provident Fund Center of the Northern New District;
at step S806: according to the interactive interrogative sentence assembled in step S804 and the second question sentence inputted by the user in S805, performing omission recovery on the second question sentence inputted by the user, and a recovery result being: how to get to the Provident Fund Center of the Northern New District?; and
at step S807: searching the recovered question sentence, and returning a corresponding answer to the user.

### Embodiment 4:

Embodiments of the present invention further provide a storage medium, the storage medium stores a computer program, wherein the computer program is configured to execute, when running, the steps in any one of the described method embodiments.

In an embodiment, in this embodiment, the storage medium may be configured to store a computer program for executing the following steps:
S1, searching whether there is voice information matching first question sentence voice information inputted by a user;
S2, in a case that a searching result is no, performing semantic analysis on the first question sentence voice information, and generating second question sentence voice information according to the first question sentence voice information and a semantic analysis result of the first question sentence voice information;
S3, searching the second question sentence voice information, and determining, according to a searching result, voice information of an interrogative sentence corresponding to the second question sentence voice information; and
S4, determining, according to an answer of the user to the interrogative sentence, question sentence voice information to be fed back to the user.

In an embodiment, in this embodiment, the storage medium may include, but is not limited to, any medium that can store a computer program, such as a USB flash drive, a Read-Only Memory (ROM for short), a Random Access Memory (RAM for short), a removable hard disk, a magnetic disk, or an optical disc.

The embodiments of the present invention further provide an electronic apparatus, including a memory and a processor; the memory stores a computer program, and the processor is configured to run the computer program, so as to execute the steps in any one of the method embodiments.

In an embodiment, the electronic apparatus can further include a transmission device and an input/output device, wherein the transmission device is connected to the processor, and the input/output device is connected to the processor.

In an embodiment, in this embodiment, the processor may be configured to execute the following steps by means of the computer program:
S1, searching whether there is voice information matching first question sentence voice information inputted by a user;
S2, in a case that a searching result is no, performing semantic analysis on the first question sentence voice information, and generating second question sentence voice information according to the first question sentence voice information and a semantic analysis result of the first question sentence voice information;
S3, searching the second question sentence voice information, and determining, according to a searching result, voice information of an interrogative sentence corresponding to the second question sentence voice information; and
S4, determining, according to an answer of the user to the interrogative sentence, question sentence voice information to be fed back to the user.

In an embodiment, for specific examples in the present embodiment, reference can be made to the examples described in the described embodiments and examples, and thus they will not be repeated again in the present embodiment.

It is apparent that a person skilled in the art shall understand that all of the described modules or steps in the present invention may be implemented by using a general computing apparatus, may be centralized on a single computing apparatus or may be distributed on a network composed of multiple computing apparatuses. In an embodiment, they may be implemented by using executable program codes of the computing apparatus. Thus, they may be stored in a storage apparatus and executed by the computing apparatus, and in some cases, the shown or described steps may be executed in a sequence different from that shown herein, or they are manufactured into integrated circuit modules, or multiple modules or steps therein are manufactured into a single integrated circuit module. Thus, the present invention is not limited to any specific hardware and software combinations.

The content above only relates to preferred embodiments of the present invention, and is not intended to limit the present invention. For a person skilled in the art, the present invention may have various modifications and changes. Any modifications, equivalent replacements, improvements, etc. made within the principle of the present invention shall all fall within the scope of protection of the present invention.

### Industrial Applicability

By means of the present invention, if voice information matching first question sentence voice information is not found, semantic analysis is performed on the first question sentence voice information, and second question sentence voice information is generated according to a semantic analysis result; searching is performed again, and voice information of an interrogative sentence corresponding to the second question sentence voice information is determined according to a searching result; and question sentence voice information to be fed back to the user is determined according to an answer of the user to the interrogative sentence. That is to say, during voice interaction with a user, voice information corresponding to first question sentence voice information can be accurately recovered, avoiding the situation of recovering omission-type semantic loss only by relying on a knowledge graph, thereby solving the problem in the related art of limitation in recovering omission-type semantic loss on the basis of a semantic understanding result of a knowledge graph.

## Claims

1. A method for processing voice information, comprising:
searching whether there is voice information matching first question sentence voice information inputted by a user;
in a case that a searching result is no, performing semantic analysis on the first question sentence voice information, and generating second question sentence voice information according to the first question sentence voice information and a semantic analysis result of the first question sentence voice information;
searching the second question sentence voice information, and determining, according to a searching result, voice information of an interrogative sentence corresponding to the second question sentence voice information; and
determining, according to an answer of the user to the interrogative sentence, question sentence voice information to be fed back to the user.

2. The method according to claim 1, wherein performing semantic analysis on the first question sentence voice information, and generating second question sentence voice information according to the first question sentence voice information and a semantic analysis result of the first question sentence voice information comprises:
extracting one or more content words from the first question sentence voice information;
performing association on the extracted one or more content words, to obtain one or more associated words; and
generating one or more pieces of second question sentence voice information according to a context of the first question sentence voice information and one or more associated words obtained by association.

3. The method according to claim 2, wherein searching the second question sentence voice information, and determining, according to a searching result, voice information of an interrogative sentence corresponding to the second question sentence voice information comprises:
in a case that there is only one associated word, searching, according to the one associated word, to obtain the voice information of an interrogative sentence corresponding to the second question sentence voice information; and
in a case that there are multiple associated words, searching, according to the multiple associated words, to obtain voice information of multiple interrogative sentences corresponding to the second question sentence voice information.

4. The method according to claim 3, wherein determining, according to an answer of the user to the interrogative sentence, question sentence voice information to be fed back to the user comprises:
broadcasting, to the user, voice information of one or more interrogative sentences obtained by searching according to the one or more associated words;
acquiring answer voice information of the user to the voice information of the one or more interrogative sentences; and
determining, according to the answer voice information of the user, question sentence voice information to be fed back to the user.

5. The method according to any one of claims 1 to 4, wherein the method further comprises:
in a case that there is voice information matching the first question sentence voice information inputted by the user through searching, feeding back, to the user, voice information matching the first question sentence voice information.

6. A device for processing voice information, comprising:
a searching module, configured to search whether there is voice information matching first question sentence voice information inputted by a user;
a first processing module, configured to, in a case that a searching result is no, perform semantic analysis on the first question sentence voice information, and generate second question sentence voice information according to a semantic analysis result;
a second processing module, configured to search the second question sentence voice information, and determine, according to a searching result, voice information of an interrogative sentence corresponding to the second question sentence voice information; and
a determination module, configured to determine, according to an answer of the user to the interrogative sentence, question sentence voice information to be fed back to the user.

7. The device according to claim 6, wherein the first processing module comprises:
an extraction unit, configured to extract one or more content words from the first question sentence voice information;
an association unit, configured to perform association on the extracted one or more content words, to obtain one or more associated words; and
a searching unit, configured to generate one or more pieces of second question sentence voice information according to a context of the first question sentence voice information and one or more associated words obtained by association.

8. The device according to claim 7, wherein
the second processing module is further configured to in a case that there is only one associated word, search, according to the one associated word, to obtain voice information of an interrogative sentence corresponding to the second question sentence voice information; and in a case that there are multiple associated words, search, according to the multiple associated words, to obtain voice information of multiple interrogative sentences corresponding to the second question sentence voice information.

9. The device according to claim 7, wherein the determination module comprises:
a broadcasting unit, configured to broadcast, to the user, voice information of one or more interrogative sentences obtained by searching according to the one or more associated words;
a determination unit, configured to acquire answer voice information of the user to the voice information of the one or more interrogative sentences; and
a recovery unit, configured to determine, according to the answer voice information of the user, question sentence voice information to be fed back to the user.

10. The device according to any one of claims 6 to 9, wherein the device further comprises:
a feedback module, configured to in a case that there is voice information matching the first question sentence voice information inputted by the user through searching, return, to the user, a result matching the first question sentence voice information.

11. A storage medium, the storage medium storing a computer program, wherein the computer program is configured to execute, when running, the method according to any one of claims 1 to 5.

12. An electronic apparatus, comprising a memory and a processor, wherein the memory stores a computer program, and the processor is configured to run the computer program so as to execute the method according to any one of claims 1 to 5.
